Europäisches Patentamt

European Patent Office

Office européen des brevets

(11) Numéro de publication: **0 205 383 B1**

(12) **FASCICULE DE BREVET EUROPEEN**

(45) Date de publication de fascicule du brevet:
20.02.91

(51) Int. Cl.⁵: **H04N 5/20**

(21) Numéro de dépôt: 86401230.7

(22) Date de dépôt: 06.06.86

(54) Circuit d'amélioration du contraste d'une image vidéo.

(30) Priorité: 07.06.85 FR 8508639

(43) Date de publication de la demande:
17.12.86 Bulletin 86/51

(45) Mention de la délivrance du brevet:
20.02.91 Bulletin 91/08

(84) Etats contractants désignés:
DE GB

(56) Documents cités:
EP-A- 0 091 868
FR-A- 2 406 922

(73) Titulaire: THOMSON-CSF
51, Esplanade du Général de Gaulle
F-92800 Puteaux(FR)

(72) Inventeur: Gillet, Claude
THOMSON-CSF SCPI 19, avenue de Messine
F-75008 Paris(FR)
Inventeur: Voisin, Gérard
THOMSON-CSF SCPI 19, avenue de Messine
F-75008 Paris(FR)
Inventeur: Gouvy, Jérôme
THOMSON-CSF SCPI 19, avenue de Messine
F-75008 Paris(FR)

(74) Mandataire: Turlèque, Clotilde et al
THOMSON-CSF SCPI
F-92045 PARIS LA DEFENSE CEDEX 67(FR)

EP 0 205 383 B1

## Description

La présente invention concerne les circuits de traitement de signal vidéo, placés dans une caméra ou un moniteur de télévision pour modifier les caractéristiques du signal vidéo, et elle concerne plus précisément les circuits tendant à modifier le contraste de l'image produite sur l'écran d'un moniteur.

Parmi les circuits connus, on trouve des circuits dits "d'expansion" automatique de contraste" qui recherchent le niveau le plus bas et le niveau le plus haut du signal vidéo sur toute la durée d'une trame. Ils étirent en hauteur le signal de manière que le niveau le plus bas se retrouve à un potentiel correspondant à l'affichage d'un point de luminance minimale ("noir") sur l'écran, tandis que le niveau le plus haut du signal se retrouve à un autre potentiel correspondant à l'affichage d'un point de luminance maximale ("blanc"). Ces deux potentiels extrêmes sont d'ailleurs éventuellement réglables manuellement. Les amplitudes intermédiaires de signal correspondent à toute l'échelle des gris entre le "noir" et le "blanc".

L'existence de ce type de circuits de traitement montre qu'il existe un besoin important d'améliorer la lisibilité d'une image reproduite sur un écran de visualisation.

Ce besoin se fait particulièrement sentir dans le domaine militaire, lorsqu'une caméra de télévision (noir et blanc) est incorporée à un système de conduite de tir pour permettre l'observation d'un paysage, la recherche d'une cible, et le pointage d'une arme sur cette cible. Par exemple, si la cible est un char, éventuellement camouflé, se déplaçant sur un fond de paysage sombre, on aura du mal à le repérer correctement et surtout à reconnaître s'il s'agit d'un char ami ou ennemi.

Deux circuits d'expansion de contraste peuvent être utilisés simultanément dans un même dispositif, le premier étant opérationnel sur toute l'image, le second, sur une fenêtre de l'image pour améliorer la visualisation d'un détail. Une telle solution est décrite par la demanderesse dans la demande européennes EP-A-0 091 868.

Une expansion de contraste sur un signal vidéo nécessite deux circuits d'asservissements : un d'asservissement du niveau de noir, et un d'asservissement du niveau de blanc. Sur les équipements existants ces asservissements sont réalisés entièrement en analogique.

Les amplificateurs d'asservissements sont des amplificateurs dont le gain est linéaire , et ont donc un temps de réponse indépendant de l'amplitude de l'excitation. Celui- ci ne dépend que de la bande passante de l'asservissement. Il est donc choisi une fois pour toutes à la définition du circuit. Deux choix différents sont utilisés dans les équipements existants.

Dans le cas des asservissements rapides, la priorité est donnée à la vitesse de réponse des asservissements. Mais ce choix pose un problème lors de changements fréquents du contenu de l'image, car une variation continuelle des niveaux de noir et de blanc gêne considérablement l'opérateur. Elle peut être provoquée par la poursuite d'un avion sur ciel partiellement nuageux ou un point lumineux intermittent (gyrophare d'avion, réflexions du soleil sur une aile d'avion).

Les asservissements lents sont choisis dans le cas où la caméra doit observer des scènes fixes ou variant lentement, afin d'éliminer les défauts décrits dans le paragraphge précédent les asservissements lents ont pour inconvénient une perte provisoire d'information lors d'un changement rapide du fond de l'image, ce qui est inadmissible si l'on fait une poursuite.

En conclusion, ces deux choix ne sont satisfaisants que sur des images dont les évolutions des niveaux de noir et de blanc sont, soit lentes soit rapides.

L'invention a pour but de pallier les défauts précités et le résultat visé par l'invention est de réaliser des asservissements d'expansion de contraste qui s'adaptent au maximum de cas de figure rencontrés, notamment dans le domaine militaire. Le système réalisé doit réagir lentement (environ 3 à 5 secondes) pour de faibles variations du contenu de l'image (passage de nuages légers, lents déplacements de la ligne de visée, lents changements d'éclairement, flash intermittent) et doit répondre très rapidement pour les grandes variations du contenu de l'image.

Un objet de l'invention est un circuit d'amélioration du contraste d'une image vidéo tel que revendiqué, qui utilise des circuits d'asservissements à temps de réponse variable commandé en fonction de la variation de la valeur moyenne du signal vidéo d'entrée et des erreurs d'asservissement vis-à-vis de deux valeurs de consigne.

Un autre objet de l'invention est un circuit d'amélioration du contraste, d'une image et d'un détail de l'image vidéo, utilisant des circuits définis dans le paragraphe précédent.

Les particularités et avantages de l'invention apparaîtront plus clairement à la lecture de la description suivante, et illustrée des différentes figures qui représentent :-
- Figure 1, le diagramme général d'un circuit d'amélioration de contraste selon l'invention;
- Figure 2, un graphique de la réponse d'un circuit d'asservissement utilisé dans un circuit conforme à l'invention;

2

- Figure 3, le schéma d'une réalisation du circuit d'amélioration de contraste selon l'invention;
- Figure 4, un ordinogramme illustrant le calcul de gain d'asservissement effectué dans un circuit conformément à l'invention;
- Figure 5 à 8, des schémas et des graphiques explicatifs d'un deuxième mode de calcul d'asservissement conformément à l'invention, et à des instants différents ($t_1$ pour les figures 5 à 6, $t_2$ pour les figures 7 à 8);
- Figure 9, un diagramme partiel d'un circuit d'amélioration de contraste selon une variante de l'invention.
- Figure 10, le diagramme d'une utilisation de trois circuits d'amélioration de contraste selon l'invention.

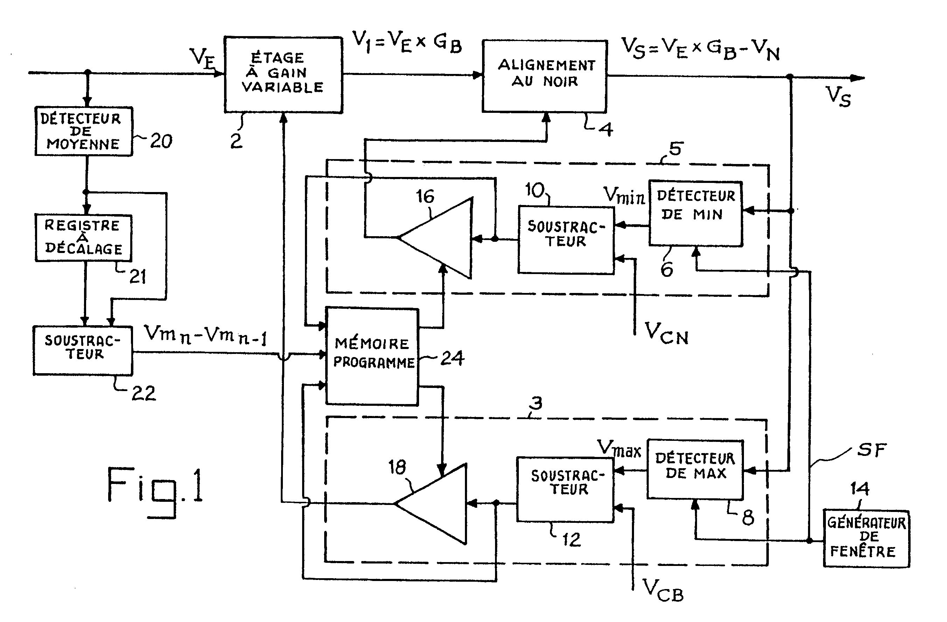

En référence à la figure 1, les principaux éléments d'un circuit d'expansion de contraste selon l'art antérieur sont les suivants : un circuit d'amplification 2 à gain variable $G_B$ reçoit le signal vidéo d'entrée $V_E$ et délivre un signal amplifié $V_1 = V_E \times G_B$. Un circuit d'alignement au noir 4 qui abaisse ce signal amplifié d'une différence potentielle de référence $V_N$.

Le gain de $G_B$ l'amplificateur 2 est commandé par un circuit d'asservissement 3 qui comporte un détecteur 8 de la valeur maximale Vmax du signal vidéo. Cette valeur peut être, suivant les cas, mesurée soit dans toute l'image, soit dans une partie de l'image que l'on veut privilégier. Elle est ensuite comparée dans un premier soustracteur 12 à une tension de référence du niveau des blancs $V_{CB}$. L'erreur d'asservissement au blanc ainsi obtenue $E_B = (V_B - V\,max)$ est amplifiée dans un premier amplificateur intégrateur 18 qui est, dans l'art antérieur linéaire, puis appliquée à la commande de gain de l'étage 2. Le niveau maximal du signal vidéo dans la zone choisie de l'image est ainsi maintenu au niveau de $V_{CB}$.

La valeur d'alignement au noir $V_N$ est fourni par un circuit d'asservissement du noir 5 qui est commandé par un détecteur 6 de la valeur minimale $V_{min}$ du signal vidéo. Comme précédemment cette valeur minimale du signal est cherchée selon les cas, soit dans toute l'image, soit dans une partie de l'image.

On compare ce minimum à la tension de référence du noir $V_{CN}$ dans un deuxième soustracteur 10 puis on amplifie la différence qui constitue l'erreur d'asservissement au noir $E_N$ dans un deuxième amplificateur intégrateur 16, initialement linéaire et l'erreur obtenue est soutraite au signal vidéo dans l'étage d'alignement au noir 4.

Le circuit qui est décrit ci-dessus fait correspondre au point de luminance minimale le noir, et au point de luminance maximale le blanc, et s'adapte ainsi automatiquement aux luminances minimale et maximale de chaque image.

Un générateur de fenêtre 14 fournit un signal de fenêtre SF qui est appliqué aux détecteurs 6 et 8 pour que le traitement soit fonction uniquement des caractéristiques du signal vidéo dans la zone concernée de l'image.

On a prévu selon l'invention de remplacer les amplificateurs linéaires d'asservissement par des amplificateurs à temps de réponse variable commandés en fonction de la vitesse de l'évolution de l'image et en fonction des erreurs d'assservissement au blanc $E_B$ et au noir $E_B$. A cet effet, on utilise des moyens qui reçoivent le signal vidéo d'entrée $V_E$, évaluent la valeur moyenne Vm de ce signal pendant une trame, et choisissent en fonction de cette valeur moyenne et des erreurs d'asservissement le temps de réponse des amplificateurs d'asservissement 16 et 18.

Ces moyens comprennent un détecteur de moyenne 20 dont la sortie est appliquée à l'entrée d'un registre analogique à décalage 21 et un troisième soustracteur (22) recevant la sortie du registre 21 qui fournit la différence $Vm_n - Vm_n - 1$ entre les valeurs moyennes de deux trames successives. Cette différence est appliquée à une mémoire programmée 24 qui fait correspondre à chaque valeur de différence un couple de valeurs de commande des temps de réponse $a_N\ a_B$. Pour des faibles valeurs de différence, on fait correspondre un couple de valeurs de commande pour des longs temps de réponse. Si cette différence dépasse une valeur prédéterminée on fait correspondre un couple de valeurs de commande pour que le système réponde plus rapidement. A titre d'exemple, pour une erreur d'asservissement maximale on peut choisir ces valeurs de commande pour que le circuit réagisse, soit en 0,2 ou 0,3 secondes, soit en plusieurs secondes. On utilise ici également un générateur de fenêtre pour commander les détecteurs pendant la zone choisie de l'image.

De plus, les temps de réponse des amplificateurs 16 et 18 étant fonction des erreurs d'asservissement, la sortie de chacun des deux soustracteurs 10 et l2 est appliquée à la mémoire programmée 24 pour que les couples de valeurs choisies en fonction de la variation de la moyenne de l'image soient modulés en fonction de ces erreurs. La mémoire contient donc deux séries de couples de valeurs de temps de réponse.

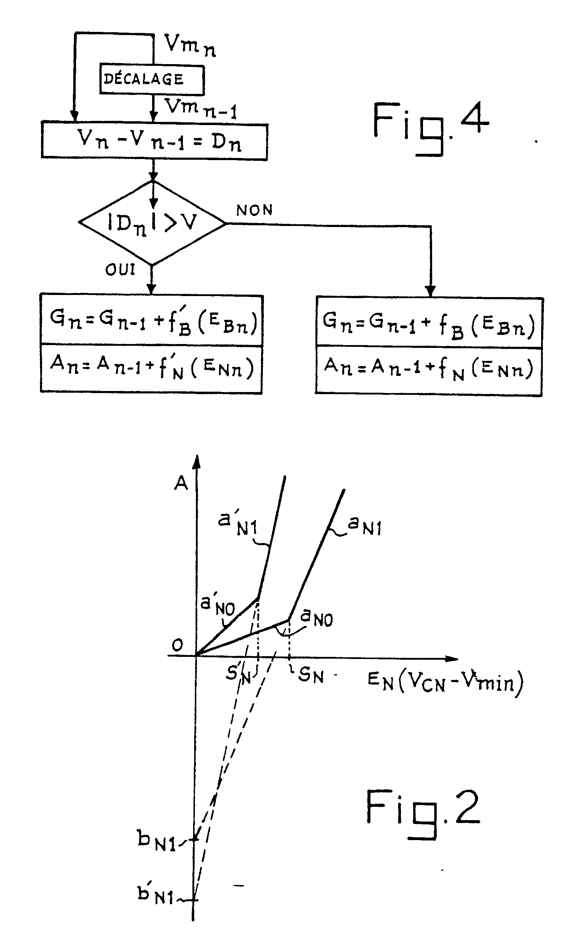

Ces deux séries sont visualisées sur la figure 2 représentant la caractéristique de transfert entre l'entrée et la sortie d'un amplificateur non linéaire, par exemple celui de l'asservissement au noir. En abscisse on a figuré la différence $V_{CN}-V_{min}$, et en ordonnée la valeur $A_N$ de l'incrément à ajouter à la commande

3

d'alignement au noir. Le segment de droite de faible pente $a_{N0}$ passant par zéro, correspond à la vitesse lente pour une différence inférieure à une valeur de seuil S déterminée, le segment $a_{N1}$ correspond à une vitesse rapide pour une différence supérieure au seuil S. Cette courbe $a_{N0}$, $a_{N1}$ est relative au cas où la valeur moyenne $V_m$ du signal d'entrée est inférieure à une valeur V déterminée. La courbe $a'_{N0}$, $a'_{N1}$ l'est pour des valeurs du signal d'entrée supérieure à V. L'asservissement pour l'alignement au blanc est similaire.

La réalisation proposée à la figure 3 utilise la technologie analogique pour la chaîne directe (2,4) et les détecteurs (6,8,20), et numérique pour le reste des asservissement. Le détecteur de moyenne 20 peut être réalisé par un amplificateur opérationnel monté en intégrateur et ne fonctionnant que sur réception du signal de fenêtre SF. Il n'intègre le signal que pendant le balayage des lignes, et ceci pendant toute une trame. Les valeurs moyennes Vm, maximale Vmax et minimale Vmin sont mémorisées chacune dans une mémoire analogique respective 26.1, 26.2, 26.3 telle qu'un échantillonneur-bloqueur. La sortie de chacune de ces mémoires est connectée à l'entrée d'un convertisseur analogique-numérique 28.1, 28.2, 28.3. Le microprocesseur 30 reçoit en outre la sortie des convertisseurs. Il calcule les deux valeurs de commande de la chaîne directe. Le séquencement de ce calcul et du fonctionnement du circuit est décrit dans les paragraphes suivants.

Dans le programme il est prévu d'attendre le début de la suppression de trame afin de se synchroniser sur la fréquence trame, et de n'effectuer les entrées et sorties des tensions que pendant la suppression de trame. Les entrées sont les tensions continues correspondant au maximum, au minimum, et à la valeur moyenne détectée durant la trame d'ordre T qui vient de s'écouler. Pendant la suppression de trame le programme commande le convertisseur analogique-numérique et stocke dans sa mémoire interne les paramètres convertis. Pendant la trame suivante d'ordre T + 1, le microprocesseur suit un programme de logique de décision représentée figure 4, et calcule alors la différence Dn entre la valeur moyenne $Vm_n$ mesurée sur la trame écoulée et celle $Vm_{n-1}$ mesurée sur la trame précédente. Cette différence apparaît en effet comme un bon critère de choix, car elle caractérise l'évolution de la valeur moyenne en amplitude et en vitesse. Elle est ensuite comparée à la valeur de seuil V. Tant que la différence est inférieure en valeur absolue au seuil, le programme choisit les asservissements lents caractérisés pour le couple $a_{N0}$, $a_{N1}$ des pentes de la courbe d'asservissement lent au noir. Lorsque la différence dépasse le seuil le programme décide d'utiliser les asservissements rapides, caractérisés pour les couples $a'_{N0}$, $a'_{N1}$ pendant un nombre N de trames, N étant choisi légèrement supérieur au temps de réponse maximal des asservissements rapides.

Pour l'asservissement au blanc, on procède de façon identique.

La fonction $f_N$ qui donne la valeur d'alignement au noir $A_n$ est définie de la manière suivante.

$$\text{Si} \left| D_n \right| < V \begin{cases} f_N(E_{Nn}) = a_{N0} \cdot E_{Nn}, & \text{si } E_{Nn} < S_N \\ f_N(E_{Nn}) = a_{N1} \cdot E_{N1} - b_{N1}, & \text{si } E_{Nn} > S_N \end{cases}$$

$$\text{Si} \left| D_n \right| > V \begin{cases} f'_N(E_{Nn}) = a'_{N0} \cdot E_{Nn}, & \text{si } E_{Nn} < S_N' \\ f'_N(E_{Nn}) = a'_{N1} \cdot E_{Nn} - b'_{N1}, & \text{si } E_{Nn} > S'_N \end{cases}$$

De même, la fonction $f_B$ qui permet d'obtenir le gain d'asservissement au blanc $G_B$ est définie de la manière suivante:

$$\text{Si} \left| D_n \right| < V \begin{cases} f_B(E_{Bn}) = a_{B0} \cdot E_{Bn}, & \text{si } E_{Bn} < S_B \\ f_B(E_{Bn}) = a_{B1} \cdot E_{Bn} - b_{B1}, & \text{si } E_{BN} > S_B \end{cases}$$

$$\text{Si} \left| D_n \right| > V \begin{cases} f'_B(E_{Bn}) = a'_{B0} \cdot E_{Bn}, & \text{si } E_{Bn} < S'_B \\ f'_B(E_{Bn}) = a'_{B1} \cdot E_{Bn} - b'_{B1}, & \text{si } E_{Bn} > S'_B. \end{cases}$$

Les valeurs $A_{Nn}$ et $G_{Bn}$ appliquées aux deux étages 2 et 4 de la chaîne directe sont définies comme suit:

$$A_{Nn} = A_{Nn-1} + f_N(E_{Nn}) \text{ ou } A_{Nn-1} + f'_N(E_{Nn})$$
$$G_{Bn} = G_{Bn-1} + f_B(E_{Bn}) \text{ ou } G_{Bn-1} + f'_B(E_{Bn}).$$

Ces valeurs de commande $G_B$ et $V_N$ sont mémorisées dans la mémoire interne du microprocesseur 30 jusqu'à la fin de la trame pendant laquelle elles sont calculées. Pendant la suppression de trame qui suit elles sortent du microprocesseur, et sont mises sous la forme analogique dans des convertisseurs numériques-analogiques 32.1 et 32.2. Elles sont ensuite mémorisées dans des mémoires du type échantillonneur-bloqueur 34.1 et 34.2 qui les maintiennent pendant toute la trame suivante aux bornes des commandes de la chaîne directe, c'est-à-dire du circuit d'amplification 2 et du circuit d'alignement au noir 4.

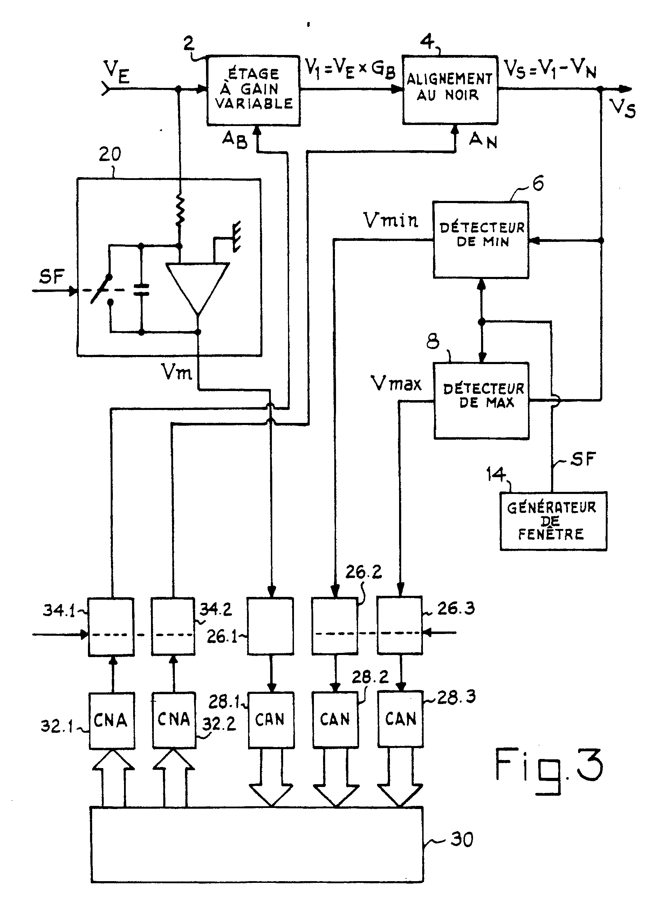

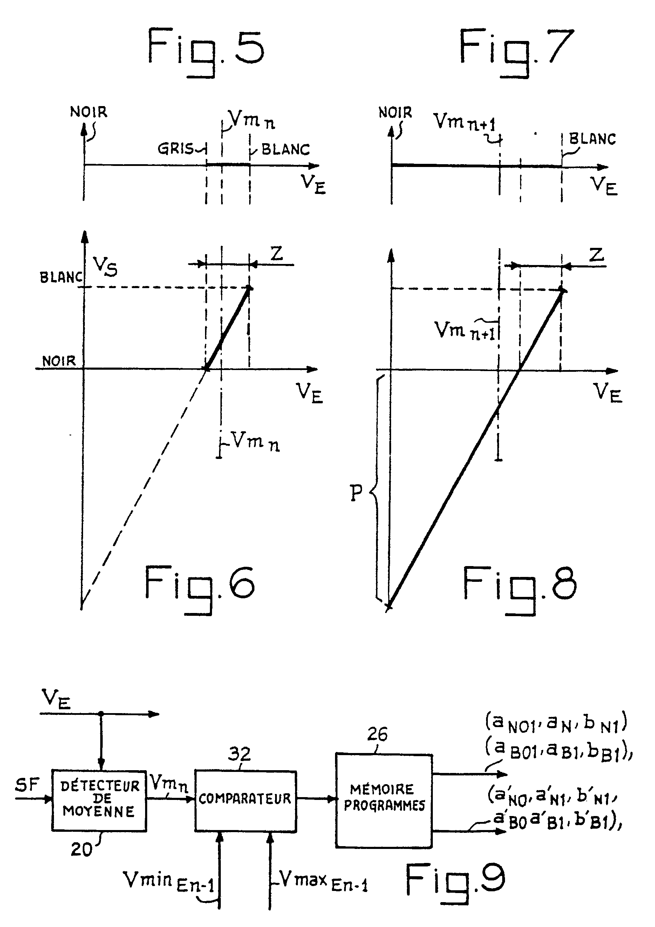

L'invention prévoit également de remplacer ou de compléter le procédé de décision décrit précédemment par un autre. Ce dernier consiste à déduire des commandes de gain, et d'alignement au noir, la gamme de contrastes sur laquelle s'applique l'expansion. Il suffit alors de tester si la valeur moyenne $Vm_{n+1}$ instantanée du signal vidéo d'entrée $V_E$ est comprise dans la gamme Z de contraste relative à la seconde précédente et de valeur moyenne $Vm_n$ et symbolisée par la plage de contraste Z, (voir figures 5 à 8). Si ce n'est pas le cas Fig.8, cela signifie que le temps de réponse, trop long, n'est plus adapté à l'image instantanée symbolisée par la valeur moyenne $Vm_{n+1}$, les asservissements doivent alors être rapides.

La figure 5 représente la gamme de teintes du signal d'entrée $V_E$, et sa valeur moyenne $Vm_n$ sans le traitement conforme à l'invention lorsqu'il n'y a que du blanc ou du gris (plage Z) dans l'image. La figure 6 représente le signal de sortie $V_S$ en ordonnée après un traitement selon l'invention. Après l'expansion de contraste, le signal de sortie $V_S$ s'étend du noir au blanc.

La figure 7 représente le signal à traiter une seconde plus tard (n + 1). Une importante zone de noir s'ajoute aux gris et aux blancs. La figure montre que le signal d'entrée $V_E$ s'étend déjà du noir au blanc. La valeur moyenne $Vm_{n+1}$ a considérablement baissée et se trouve en dehors de la plage Z caractéristique du signal d'entrée $V_E$ une seconde plus tôt. Selon le critère énoncé ci-dessus, la vitesse d'asservissement doit être augmentée. On constate de plus, figure 8, en gardant la même vitesse d'asservissement que seules les zones claires seraient visualisées, les autres zones, repérées P, étant noires car se trouvant au-dessous du niveau du noir.

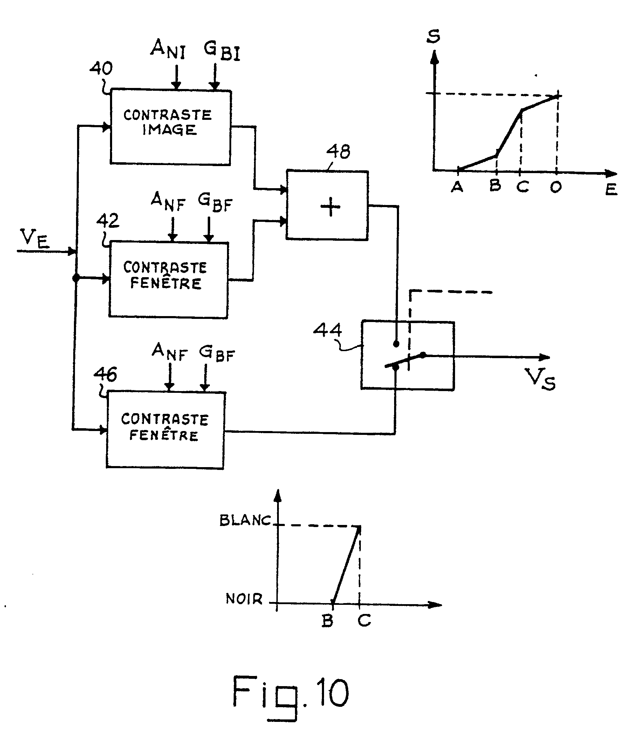

La réalisation de cette solution, représentée par la figure 10 met en oeuvre des moyens de comparaison 32 entre la valeur moyenne $Vm_n$ avec le couple formé par la valeur minimale signal d'entrée $Vmin_{En-1}$ et la valeur maximale du signal d'entrée $Vmax_{En-1}$. Une deuxième mémoire programmée 26 reçoit la sortie de ces moyens de comparaison, et délivre des couples de valeur de commande des amplificateurs 16 et 18. Si la valeur moyenne se trouve entre les valeurs minimale et maximale du signal d'entrée, les valeurs de commande sont faibles:

$$(a_{N01}, a_N, b_{N1})(a_{B01}, a_{B1}, b_{B1}),$$

ceci pour commander les asservissements lents. Si la valeur moyenne $Vm_n$ est en dehors du couple de valeur du signal d'entrée, la mémoire délivre des valeurs de commande fortes

$$(a'_{N0}, a'_{N1}, b'_{N1}, a'_{B0} a'_{B1}, b'_{B1}),$$

ceci correspondant à des asservissements plutôt rapides.

On peut également envisagé de cumuler ce critère de choix avec le critère décrit dans la réalisation principale, les asservissements lents étant choisis si l'une ou l'autre des deux conditions sont réunies.

L'invention peut être appliquée à certaines caméras civiles, dans certains cas d'utilisation, par exemple, lors d'alternances rapides de zones d'ombres et de lumières.

Comme représenté à la figure 10, trois circuits conformes à l'invention peuvent être utilisés simultanément dans un même circuit d'amélioration de contraste. Le premier, 40, améliore le contraste sur toute l'image, le second, 42, et le troisième 46 sur une zone bien déterminée de l'image, ces derniers étant commandés par un signal de fenêtre SF et par des valeurs de commande $A_{NF}$, $G_{BF}$ plus importantes que celles $A_{NI}$, $G_{BI}$ appliquées au circuit de contraste image.

Les sorties du premier et du deuxième circuits sont connectées à l'entrée d'un sommateur 48 dont la sortie est appliquée à la première borne d'un interrupteur 44. Le signal issu de ce sommateur bénéficie d'un fort contraste entre les valeurs minimale B et maximale C de la fenêtre et d'un moindre contraste pour les valeurs de signal non comprises dans la fenêtre, c'est-à-dire entre A et B, et C et D. La deuxième borne de l'interrupteur reçoit la sortie du troisième circuit 46 délivrant un signal dont le contraste est basé entièrement sur les valeurs minimale B et maximale C de la fenêtre.

L'opérateur peut ainsi choisi par l'intermédiaire de l'interrupteur 44 le mode de contraste qu'il désire.

D'autres combinaisons de tels circuits de contraste sont envisageables selon les différentes utilisations possibles de l'observation d'une image visualisée.

**Revendications**

1. Circuit d'amélioration du contraste d'un signal vidéo d'entrée ($V_E$) comportant un étage d'amplification à gain variable (2) pour aligner sur le blanc les points les plus clairs dudit signal, suivi d'un circuit d'alignement sur le noir (4) des points les plus sombres dudit signal et délivrant un signal vidéo de sortie ($V_S$), un premier circuit d'asservissement (3) recevant le signal de sortie et comportant un détecteur des maximums (8), suivi d'un premier soustracteur (12), délivrant une erreur d'asservissement sur les blancs ($E_B$) par rapport à une référence ($V_{CB}$) pour commander le gain ($G_B$) dudit étage d'amplification (2) à l'aide d'un premier amplificateur (18), un deuxième circuit d'asservissement (5) recevant le signal de sortie et comportant un détecteur des minimums (6) suivi d'un deuxième soustracteur (10) délivrant une erreur d'asservissement sur les noirs ($E_N$) par rapport à une référence ($V_{CN}$) pour commander le niveau d'alignement au noir ($A_N$) dudit circuit d'alignement (4) à l'aide d'un deuxième amplificateur (16), le circuit d'amélioration de contraste étant caractérisé en ce que lesdits deux amplificateurs (16-18) ont des temps de réponse variables et en ce qu'il comporte des moyens (20,21,22) pour évaluer la valeur moyenne du signal vidéo d'entrée (Vm) et commander les temps de réponse des amplificateurs d'asservissement après comparaison de ladite valeur moyenne avec au moins un seuil (V) de consigne prédéterminé, de façon à ce que la vitesse de réponse des asservissements varie en fonction de l'évolution de la valeur moyenne et des erreurs d'asservissement.

2. Circuit selon la revendication 1, caractérisé en ce que les moyens pour évaluer la valeur moyenne (Vm) et commander les gains sont constituer d'un détecteur de moyenne (20) recevant le signal d'entrée ($V_E$), d'un soustracteur (22) recevant la sortie du détecteur de valeur moyenne (20) d'une part directement, et d'autre part par l'intermédiaire d'un registre à décalage (21) et calculant la différence des valeurs moyennes de trame successives et d'une mémoire programmée (24) recevant ladite différence de valeurs moyennes et les erreurs d'asservissement et délivrant en fonction de ladite valeur de seuil prédéterminée (V) et des erreurs d'asservissement un couple de valeur de commande de gain destinées à commander les gains des amplificateurs (16,18).

3. Circuit selon l'une des revendications 1 ou 2, caractérisé en ce que les temps de réponse respectifs des amplificateurs d'asservissement (16, 18) sont longs en dessous de ladite valeur de seuil déterminée et courts au-dessus de ladite valeur de seuil.

4. Circuit selon l'une quelconque des revendications précédente dont la chaîne directe (2,4) et les détecteurs (6,8 et 20) sont des circuits analogiques, caractérisé en ce que les amplificateurs (16-18), les soustracteurs (10,12,22) et la mémoire programmée (24) sont réalisés sous la forme d'un microprocesseur (30), une première série d'échantillonneurs-bloqueurs (26.1, 26.2, 26.3) recevant les trois valeurs détectées (Vm, $V_{min}$ et $V_{max}$), une deuxième série d'échantillonneur-bloqueurs (34.1 et 34.2) recevant du microprocesseur les valeurs de commande numérisées de gain ($G_B$) de l'étage à gain variable (2) et ($A_N$) du circuit d'alignement au noir (4), les entrées et sorties de ces données et valeurs dans le microprocesseur s'effectuant pendant les retours de trame du signal vidéo d'entrée.

5. Circuit selon l'une quelconque des revendications précédentes caractérisé en ce qu'il comprend un circuit générateur de fenêtre (14) délivrant un signal de fenêtre (SF) pour commander lesdits détecteurs (6,8 et 20).

6. Circuit selon l'une quelconque des revendications précédentes caractérisé en ce qu'il comprend des moyens de comparaison (32) de ladite valeur moyenne (Vm) avec les valeurs minimale ($V_E$ min) et maximale ($V_E$ max) du signal d'entrée ($V_E$), et en ce qu'il comprend une deuxième mémoire programmée (26) remplaçant la première qui délivre des valeurs de commande d'asservissement fortes quand ladite valeur moyenne est comprise entre lesdites valeurs du signal d'entrée ($V_E$max et $V_E$ min) et des valeurs faibles lorsque la valeur moyenne est en dehors des deux valeurs de sortie.

7. Circuit d'amélioration de contraste d'un détail d'une image vidéo comportant un premier circuit d'expansion de contraste du signal vidéo sur toute l'image (40), un deuxième et un troisième circuits d'expansion de contraste sur une partie seulement de l'image (42), les sorties des premier et deuxième circuit étant sommées par un sommateur (48), un interrupteur (44) permettant de choisir soit la sortie dudit sommateur, soit la sortie du troisième circuit de contraste (46).

**Claims**

1. A circuit for enhancing the contrast of an input video signal ($V_E$) with at least one contrast expansion circuit comprising a variable gain amplification stage (2) in order to align the brightest points of the said signal on the white, followed by a circuit (4) for alignment on the black of the darkest parts of the said signal and supplying an output video signal ($V_s$), a first servocontrol circuit (3) receiving the output signal and comprising a maximum detector (8), followed by a first subtracter (12) supplying a servocontrol deviation on the whites ($E_B$) in relation to a reference ($V_{CB}$ in order to control the gain ($V_{GB}$) of the said amplification stage (2) with the aid of a first amplifier (18), a second servocontrol circuit (5) receiving the output signal and comprising a minimum detector (6) followed by a second subtracter (10) supplying a servocontrol deviation on the blacks ($E_N$) in relation to a reference ($V_{CN}$) in order to control the alignment level with respect to the black ($A_N$) of the said alignment circuit (4) with the aid of a second amplifier (16), the contrast expansion circuit being characterized in that the said two amplifiers (16 through 18) have a variable response time and in that it comprises means (20, 21 and 22) in order to compute the mean value of the input video signal (Vm) and to control the response time of the servocontrol amplifiers after comparison of the said mean value with at least one predetermined target threshold (V) in such a manner that the response speed of the servocontrol means varies as a function of the evolution of the mean value and of the servocontrol deviation.

2. The circuit as claimed in claim 1, characterized in that the means for computing the mean value (Vm) and for controlling the gains are constituted by a mean value detector (20) receiving the input signal ($V_E$), by a subtracter (22) receiving the output of the mean value detector (20) on the one hand directly and on the other hand by the intermediary of a shift register (21) and computing the difference of the successive mean frame values and by a programmed memory (24) receiving the said mean value difference and the servocontrol deviation and supplying as a function of the said predetermined threshold value (V) and of the servocontrol deviation a gain control value couple intended to control the gains of the amplifiers (16 and 18).

3. The circuit as claimed in claim 1 or claim 2, characterized in that the respective response time of the servocontrol amplifiers (16 and 18) is long under the said determined threshold value and is short above the said threshold value.

4. The circuit as claimed in any one of the preceding claims wherein the direct chain (2 and 4) and the detectors (6, 8 and 20) are analog circuits, characterized in that the amplifiers (16 through 18), the subtracters (10, 12 and 22) and the programmed memory (24) are in the form of a microprocessor (30), one first series of blocking samplers (26.1, 26.2 and 26.3) receiving the three detected values (Vm, V $_{min}$ and $V_{max}$), a second series of blocking samplers (34.1 and 34.2) receiving, from the said microprocessor, the digitized gain control values ($G_B$) of the variable gain stage (2) and ($A_N$) of the black alignment circuit (4), the input and the output of these data and values in the microprocessor being performed during frame returns of the input video signal.

5. The circuit as claimed in any one of the preceding claims characterized in that the contrast expansion circuit comprises a window generator circuit (14) supplying a window signal (SF) in order to control the said detectors (6, 8 and 20).

6. The circuit as claimed in any one of the preceding claims, characterized in that the contrast expansion circuit comprises comparison means (32) for the comparison of the said mean value (Vm) with the said minimum ($V_E$ min) and maximum ($V_E$ max) values of the input signal ($V_E$) and in that it comprises a second programmed memory (26) replacing the second one which supplies high servocontrol values when the said mean value is comprised between the said values of the input signal ($V_E$ max and $V_E$ min) and low values when the mean value is outside the two output values.

7. The circuit for enhancing the contrast of a detail of a video image as claimed in any one of the preceding claims, characterized in that it comprises three contrast expansion circuits, a first contrast expansion circuit for the video signal for the entire image (40), a second and a third contrast expansion circuit for only a part of the image (42), the outputs of the first and of the second circuits being summated by a summating means (48), a switch (44) making possible selection of the output of the said summating means or of the output of the third contrast circuit (46).

EP 0 205 383 B1

**Ansprüche**

1. Schaltung zur verbesserung des Kontrastes eines Videoeingangssignals ($V_E$) anhand wenigstens einer Kontrasterhöhungsschaltung, die eine Verstärkerstufe mit variabler Verstärkung (2) zum Angleichen der hellsten Punkte des Signals an den Weißpegel umfaßt, gefolgt von einer Schaltung (4) zum Angleichen der dunkelsten Punkte des Signals an den Schwarzpegel und zum Liefern eines Videoausgangssignals ($V_S$), einer ersten Regelungsschaltung (3), die das Ausgangssignal empfängt und einen Höchstwertdetektor (8) aufweist, gefolgt von einem ersten Subtrahierer (12), der einen Regelungsfehler der Weißpegel ($E_B$) bezüglich eines Referenzpegels ($V_{CB}$) liefert, um mit Hilfe eines ersten Verstärkers (18) die Verstärkung ($G_B$) der Verstärkerstufe (2) zu steuern, und einer zweiten Regelungsschaltung (5), die das Ausgangssignal empfängt und einen Kleinstwertdetektor (6) aufweist, gefolgt von einem zweiten Subtrahierer (10), der einen Regelungsfehler für die Schwarzpegel ($E_N$) bezüglich eines Referenzwertes ($V_{CN}$) liefert, um mit Hilfe eines zweiten Verstärkers (16) das Schwarzpegel-Anpassungsniveau ($A_N$) der Angleichungsschaltung (4) zu steuern, wobei die Kontrastverbesserungsschaltung dadurch gekennzeichnet ist, daß die zwei Verstärker (16, 18) variable Ansprechzeiten besitzen und daß sie Mittel (20, 21, 22) umfaßt, die den Mittelwert ($V_m$) des Videoeingangssignals bestimmen und nach dem Vergleichen des Mittelwertes mit wenigstens einem vorgegebenen Einstellgrößen-Schwellenwert (V) die Ansprechzeit der Regelungsverstärker steuern, derart, daß sich die Ansprechgeschwindigkeit der Regelungsschaltungen in Abhängigkeit von der Mittelwert- und Regelungsfehlerbestimmung ändert.

2. Schaltung gemäß Anspruch 1, dadurch gekennzeichnet, daß die Mittel zum Bestimmen des Mittelwertes ($V_m$) und zum Steuern der Verstärkungen einen das Eingangssignal ($V_E$) empfangenden Mittelwertdetektor (20), einen Subtrahierer (22), der die Ausgabe des Mittelwertdetektors (20) einerseits direkt und andererseits über ein dazwischen geschaltetes Schieberegister (21) empfängt und die Differenz der Mittelwerte aufeinanderfolgender Teilbilder berechnet, und einen Programmierten Speicher (24), der die Differenz der Mittelwerte und der Regelungsfehler empfängt und in Abhängigkeit vom vorgegebenen Schwellenwert (V) und von den Regelungsfehlern ein Paar von Verstärkungssteuerwerten ausgibt, die der Steuerung der Verstärkungen der Verstärker (16, 18) dienen, umfassen.

3. Schaltung gemäß einem der Ansprüche 1 oder 2, dadurch gekennzeichnet, daß die jeweilige Ansprechzeit der Regelungsverstärker (16, 18) unterhalb des bestimmten Schwellenwertes lang und oberhalb des Schwellenwertes kurz sind.

4. Schaltung gemäß einem der vorangehenden Ansprüche, in der die direkte Folge von Schaltungen (2, 4) und die Detektoren (6, 8, 20) durch Analogschaltungen gegeben sind, dadurch gekennzeichnet, daß die Verstärker (16, 18), die Subtrahierer (10, 12, 22) und der programmierte Speicher (24) in Form eines Mikroprozessors (30) verwirklicht sind, wobei eine erste Reihe von Abtast-/Halteschaltungen (26.1, 26.2, 26.3) die drei ermittelten Werte (Vm, $V_{min}$, $V_{max}$) empfängt, wobei eine zweite Reihe von Abtast-/Halteschaltungen (34.1 und 34.2) vom Mikroprozessor die digitalisierten Verstärkungssteuerwerte ($G_B$) der Stufe mit variabler Verstärkung (2) und ($A_N$) der SchwarzpegelAnpassungsschaltung (4) empfängt und wobei die Eingabe und die Ausgabe dieser Daten und Werte im Mikroprozessor während der Teilbildrücksprünge des Eingangsvideosignals erfolgt.

5. Schaltung gemäß einem der vorangehenden Ansprüche, dadurch gekennzeichnet, daß die Kontrasterhöhungsschaltung eine Fenstererzeugerschaltung (14) umfaßt, die ein Fenstersignal (SF) liefert, um die Detektoren (6, 8, 20) zu steuern.

6. Schaltung gemäß einem der vorangehenden Ansprüche, dadurch gekennzeichnet, daß die Kontrasterhöhungsschaltung Mittel (32) zum Vergleichen des Mittelwertes (Vm) mit den minimalen ($V_E$ min) und maximalen ($V_E$ max) Werten des Eingangssignals ($V_E$) umfaßt und daß sie einen den ersten Speicher ersetzenden zweiten programmierten Speicher (26) umfaßt, der hohe RegelungsSteuerwerte liefert, wenn der Mittelwert zwischen den Werten des Eingangssignals ($V_E$ max und $V_E$ min) liegt, und der kleine Werte liefert, wenn der Mittelwert nicht zwischen zwei Ausgangswerten liegt.

7. Schaltung zur Verbesserung des Kontrastes eines Teils eines Videobildes gemäß einem der vorangehenden Ansprüche, dadurch gekennzeichnet, daß sie drei Kontrasterhöhungsschaltungen, d.h. eine erste Erhöhungsschaltung für den Kontrast des Videosginals auf dem gesamten Bild (40), eine zweite und eine dritte Erhöhungsschaltung für den Kontrast lediglich eines Teils des Bildes (42), umfaßt, wobei

8

die Ausgaben der ersten und der zweiten Schaltung mittels eines Summierers (48) summiert werden und wobei ein Unterbrecher (44) gestattet, entweder die Ausgabe des Summierers oder die Ausgabe der dritten Kontrastschaltung (46) zu wählen.

Fig.1

$V_E$

$V_1 = V_E \times G_B$

$V_S = V_E \times G_B - V_N$

$V_S$

ÉTAGE À GAIN VARIABLE  2

ALIGNEMENT AU NOIR  4

DÉTECTEUR DE MOYENNE  20

REGISTRE À DÉCALAGE  21

SOUSTRAC-TEUR  22

$Vm_n - Vm_{n-1}$

MÉMOIRE PROGRAMME  24

16

SOUSTRAC-TEUR  10

DÉTECTEUR DE MIN  6

$V_{min}$

$V_{CN}$

5

18

SOUSTRAC-TEUR  12

DÉTECTEUR DE MAX  8

$V_{max}$

$V_{CB}$

3

SF

GÉNÉRATEUR DE FENÊTRE  14

EP 0 205 383 B1

Fig.4

Fig.2

Fig.3

# Fig.5

# Fig.7

NOIR

$Vm_n$

GRIS⌐ ⌐ ⌐BLANC

$V_E$

NOIR

$Vm_{n+1}$

BLANC

$V_E$

BLANC $V_S$

Z

NOIR

$V_E$

⌐$Vm_n$

# Fig.6

Z

$Vm_{\widetilde{n+1}}$

$V_E$

P

# Fig.8

$V_E$

$(a_{N01}, a_N, b_{N1})$
$(a_{B01}, a_{B1}, b_{B1})$,

26

SF → DÉTECTEUR DE MOYENNE → $Vm_n$ → COMPARATEUR → MÉMOIRE PROGRAMMES

32

20

$(a'_{N0}, a'_{N1}, b'_{N1},$
$a'_{B0} a'_{B1}, b'_{B1})$,

$Vmin_{En-1}$

$Vmax_{En-1}$

# Fig.9

Fig.10